Europäisches Patentamt

European Patent Office

Office européen des brevets

(19)

(11) Numéro de publication: **0 253 728**
**A1**

(12) **DEMANDE DE BREVET EUROPEEN**

(21) Numéro de dépôt: **87401648.8**

(22) Date de dépôt: **10.07.87**

(51) Int. Cl.4: **G 02 B 6/44**

(30) Priorité: **15.07.86 FR 8610270**

(43) Date de publication de la demande:
**20.01.88 Bulletin 88/03**

(84) Etats contractants désignés:
**BE CH DE GB IT LI NL SE**

(71) Demandeur: **SAT Société Anonyme de Télécommunications**
**40, avenue de New York**
**F-75116 Paris (FR)**

SOCIETE INDUSTRIELLE DE LIAISONS ELECTRIQUES - SILEC
**64bis, rue de Monceau**
**F-75008 Paris (FR)**

(72) Inventeur: **Fraize, Claude Robert**
**23 rue des Pommiers**
**F-91070 Bondoufle (FR)**

**Forja, Christian**
**41 avenue de la Fraternelle**
**F-91320 Wissous (FR)**

**Calevo, Robert**
**12 rue des Bleuets**
**F-94240 L'Hay Les Roses (FR)**

(74) Mandataire: **Bloch, Gérard et al**
**6, rue du Faubourg Saint-Honoré**
**F-75008 Paris (FR)**

(54) Dispositif de réserve pour fibres optiques.

(57) Un boîtier à fond plat (10) comprend un noyau (11) délimitant un évidemment (12) ayant sensiblement la forme d'un oméga à boucle fermée, aux extrémités duquel sont prévus des canaux d'entrée (13) et de sortie (14) des fibres optiques. Chaque fibre (2) est protégée par deux conduits tubulaires (21,22) la laissant nue, lovée autour du noyau (11). Les conduits tubulaires (21,22) sont immobilisés dans les canaux d'entrée (13) et de sortie (14) lorsque le boîtier est fermé. Le noyau (11) comprend une partie centrale (111) solidaire du boîtier (10), entourée par un anneau (112) amovible, destiné à être enlevé après lovage des fibres optiques (2).

L'invention concerne les boîtiers d'emmagasinage et les cassettes destinées à recevoir et à protéger les fibres optiques dès leur sortie des câbles.

FIG.1

Bundesdruckerei Berlin

## Description

"Dispositif de réserve pour fibres optiques"

La présente invention a pour objet un dispositif de réserve pour fibres optiques, chaque fibre optique étant protégée par au moins un conduit tubulaire, ledit dispositif étant formé d'un boîtier à fond plat et d'un couvercle, ledit fond étant pourvu d'un noyau délimitant un évidement ayant sensiblement la forme d'un oméga à boucle fermée, aux extrémités duquel sont prévus un canal d'entrée et un canal de sortie des fibres optiques.

La présente invention concerne donc les boîtiers d'emmagasinage pour fibres optiques, et plus particulièrement les cassettes destinées à recevoir des faisceaux de fibres optiques dès leur sortie de câbles optiques, afin de protéger les fibres et de ménager des longueurs de réserve sur le trajet du faisceau.

Ces cassettes ont essentiellement pour fonction d'assurer une réserve en fibre optique aux extrémités des câbles optiques tout en assurant une protection mécanique, afin de protéger les fibres et ne pas affecter leurs caractéristiques de transmission, et leur durée de vie, tout en respectant leur rayon de courbure minimal.

Ces cassettes trouvent leur application sur les lignes de télécommunications par fibres optiques, dans les réseaux de télédistribution ou de vidéocommunication par exemple.

On connaît déjà, par la demande française no 2 566 756, un dispositif de réserve du type ci-dessus. Dans ce dispositif, chacune des fibres optiques étant disposée dans un conduit tubulaire de protection, elle est lovée autour du noyau, munie de son conduit de protection.

On connaît aussi, par l'article "Optical fibre patchcord tensile protector" dans Research Disclosure no 186, octobre 1979, pages 555-556, no 18 637, Industrial Opportunities Ltd, Havant, Hants, G.B, un dispositif d'un type voisin dans lequel on prévoit un conduit de protection d'un dia mètre sensiblement plus large que le diamètre de la fibre, celle-ci étant encore lovée en restant munie de son conduit de protection.

On connaît aussi, par le brevet français no 2 573 877, au nom de la demanderesse, un dispositif de type voisin, dans lequel les fibres sont stockées dans des conduits tubulaires souples, chaque conduit tubulaire étant un ruban épais évitant le chevauchement des spires.

Or, ces dispositifs de l'art antérieur ne donnent pas satisfaction, dans des conditions de fortes variations de température. En effet, les conduits tubulaires étant en général en matériau synthétique, ils ne présentent pas le même coefficient d'élasticité, lors de variations de températures, que les fibres optiques, ce qui entraîne couramment des ruptures ou des tensions dommageables pour les fibres optiques.

L'invention se propose de remédier à ces défauts des cassettes de l'art antérieur.

A cet effet, elle a pour objet un dispositif du type défini ci-dessus, caractérisé par le fait que chaque fibre optique est protégée par au moins deux conduits tubulaires la laissant nue, lovée autour dudit noyau, lesdits conduits tubulaires étant disposés dans ledit canal d'entrée et dans ledit canal de sortie, respectivement, qui sont agencés pour immobiliser lesdits conduits tubulaires lorsque ledit couvercle ferme le dispositif de réserve.

Dans une première forme de réalisation, au moins un desdits canaux d'entrée et de sortie a une section rectangulaire afin de recevoir lesdits conduits tubulaires alignés les uns à côté des autres.

Dans une deuxième forme de réalisation, au moins un desdits canaux d'entrée et de sortie a une section demi circulaire, il est ménagé, dans ledit couvercle un canal correspondant ayant la même section demi circulaire, et il est prévu un barillet pourvu de rainures dans lesquelles sont disposées lesdits conduits tubulaires, ledit barillet étant disposé dans les deux dits canaux à section demi-circulaire.

Avantageusement, ledit noyau comprend une partie centrale sensiblement cylindrique solidaire dudit boîtier, entourée par un anneau amovible, destiné à être enlevé après lovage des fibres optiques.

D'autres avantages et caractéristiques apparaîtront à la lecture de la description suivante illustrée par des dessins.

La figure 1 représente une vue en perspective du boîtier du dispositif de l'invention, avant la pose du couvercle.

La figure 2 est une première réalisation d'insertion des conduits tubulaires en sortie de la cassette.

La figure 3 est une variante de la figure 2.

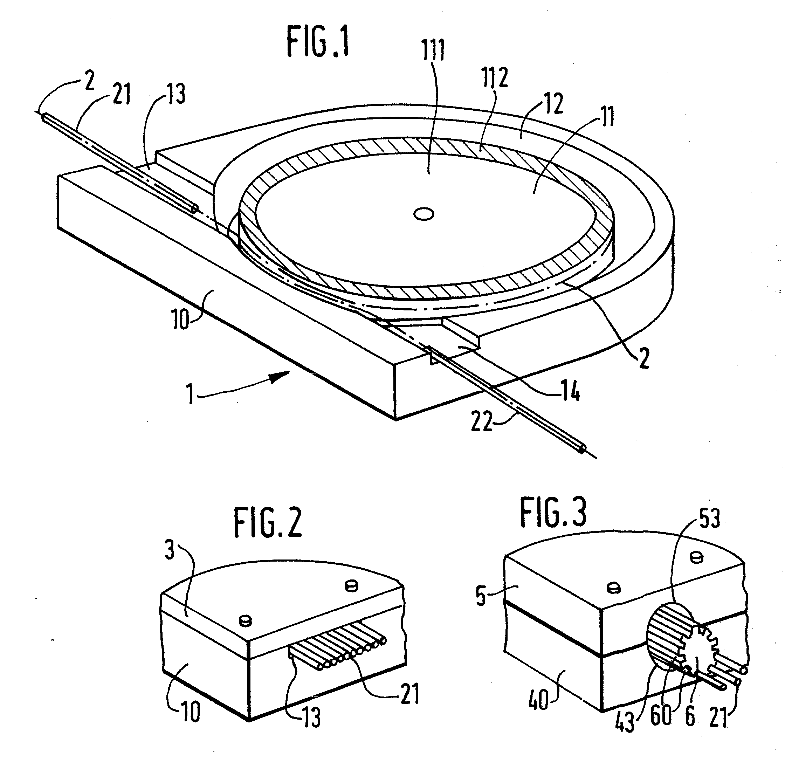

En se référant à la figure 1, la cassette 1 de l'invention se compose essentiellement d'un boîtier 10 à fond plat pourvu d'un noyau 11 délimitant un évidement 12 ayant sensiblement la forme d'un oméga dont la boucle serait fermée.

A l'intérieur de cet oméga, le noyau 11 est sensiblement cylindrique et les fibres optiques peuvent être lovées autour en suivant la trajectoire de l'évidement 12.

Ce noyau 11 comprend une partie centrale 111 solidaire du boîtier 10 et un anneau 112, entourant la partie 111, qui est amovible ainsi qu'il sera explicité ultérieurement. A chaque extrémité de cet oméga 12 sont prévus deux canaux 13 et 14 respectivement pour l'entrée et la sortie des fibres optiques. Chaque canal peut, soit être de section rectangulaire 13 s'il s'agit d'une structure de câble à plat comme représenté sur la figure 2, ou demi circulaire 43 s'il s'agit de câbles à structure quasi cylindrique comme représenté sur la figure 3.

Un couvercle, non représenté sur la figure 1, peut fermer de façon connue en elle-même cette cassette de réserve, par vissage par exemple sur le boîtier 10.

On sait que lorsque les fibres optiques 2 sont extraites du câble optique elles sont introduites dans des conduits tubulaires 21, 22 souples pour y être protégées. On prévoit selon l'invention de protéger chaque fibre 2 au moyen d'au moins deux conduits tubulaires 21, 22 afin de laisser la fibre 2 nue dans la cassette 1 de réserve. On dispose les extrémités des conduits tubulaires 21, 22 dans les canaux 13 et 14 respectivement de la cassette 1. On a représenté sur la figure 1 une seule fibre optique 2 afin de simplifier le dessin mais il est bien évident que l'on pourrait recevoir dans la cassette 1 les huit, dix, ou plus, fibres extraites d'un câble optique en alignant les huit ou dix extrémités des conduits tubulaires dans le canal 13, (resp. 43) de la cassette 1 comme représenté sur la figure 2, (resp. 3). Dans la version de la figure 2, les conduits tubulaires 21 sont alignés dans le canal 13 puis maintenus en place et immobilisés lorsque le couvercle 3 est posé ou vissé pour fermer la cassette 1.

Dans la version de la figure 3, le boîtier 40 de la cassette présente un canal 43 à section demi circulaire, tandis que dans le couvercle 5 est ménagé également un canal 53 correspondant, ayant la même section demi circulaire. Selon cette dernière variante on dispose les extrémités des conduits tubulaires 21 dans les rainures 60 d'un barillet 6. Ces rainures 60 sont disposées sur la périphérie de ce barillet 6 et longitudinalement si bien que lorsque le couvercle 5 est posé sur le fond 40 pour fermer la cassette 1 les conduits tubulaires 21 sont immobilisés dans les rainures 60 de ce barillet 6.

Dans les deux variantes de réalisation, la fermeture du couvercle 3, (resp. 5) sur le boîtier 10 (resp. 40) provoque même un léger écrasement des conduits tubulaires 21 tout en laissant les fibres qu'ils contiennent, libres. Ceci permet l'immobilisation des conduits tubulaires 21 dans la cassette 1.

La fibre 2 est donc lovée dans la cassette, nue sans conduit tubulaire autour du noyau 11 et plus précisément autour de l'anneau 112. Après lovage de toutes les fibres 2, on enlève, selon l'invention, l'anneau 112 ce qui procure une grande liberté aux fibres dans la cassette, les fibres se trouvant suivant une position intermédiaire entre les parois extérieures et intérieures de l'évidemment 12 formé dans le fond de la cassette.

L'immobilisation des conduits tubulaires 21, 22 par le couvercle 3 ou 5 assure en outre l'étanchéité de la cassette et la protection des fibres 2 de l'humidité. Il peut d'ailleurs être avantageux de prévoir des trous dans le couvercle en vis-à-vis du chemin des fibres 2 dénudées afin d'introduire un gel protégeant les fibres 2 de l'humidité.

Une telle réalisation et son procédé de mise en oeuvre donnent toute satisfaction au technicien pour éviter toute contrainte de traction sur les fibres.

Il est bien entendu que le couvercle peut être soit une simple plaque de recouvrement 3 soit une structure identique 5 aux boîtiers décrits ci-dessus.

Il est également équivalent, au lieu de prévoir deux conduits tubulaires par fibre au plus, de n'en prévoir qu'un seul et de la sectionner sur le site à l'emplacement approprié afin d'emmagasiner la fibre nue dans la cassette.

Sur la figure 1, la fibre 2 est représentée par un trait discontinu. Naturellement, ce trait peut être représentatif d'une seule fibre ou d'un faisceau de plusieurs fibres.

## Revendications

1. Dispositif de réserve pour fibres optiques, chaque fibre optique étant protégée par au moins un conduit tubulaire, ledit dispositif étant formé d'un boîtier à fond plat et d'un couvercle, ledit fond étant pourvu d'un noyau délimitant un évidement ayant sensiblement la forme d'un oméga à boucle fermée, aux extrémités duquel sont prévus un canal d'entrée et un canal de sortie des fibres optiques, dispositif caractérisé par le fait que chaque fibre optique (2) est protégée par au moins deux conduits tubulaires (21,22), la laissant nue, lovée autour dudit noyau (11), lesdits conduits tubulaires (21,22) étant disposés dans ledit canal d'entrée (13,43) et dans ledit canal de sortie (14), respectivement, qui sont agencés pour immobiliser lesdits conduits tubulaires (21,22) lorsque ledit couvercle (3;5) ferme le dispositif de réserve (1).

2. Dispositif selon la revendication 1 caractérisé par le fait que au moins un desdits canaux d'entrée (13) et de sortie (14) a une section rectangulaire afin de recevoir lesdits conduits tubulaires (21) alignés les uns à côté des autres.

3. Dispositif selon la revendication 1 caractérisé par le fait que au moins un desdits canaux (43) d'entrée et de sortie a une section demi circulaire, il est ménagé, dans ledit couvercle (5) un canal (53) correspondant ayant la même section demi circulaire, il est prévu un barillet (6) pourvu de rainures (60) dans lesquelles sont disposées lesdits conduits tubulaires (21), ledit barillet (6) étant disposé dans les deux dits canaux (43,53) à section demi-circulaire.

4. Dispositif selon l'une des revendications 1 à 3, caractérisé par le fait que ledit noyau (11) comprend une partie centrale (111) sensiblement cylindrique solidaire dudit boîtier (10), entourée par un anneau (112) amovible, destiné à être enlevé après lovage des fibres optiques (2).

0253728

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y,D | FR-A-2 566 756 (CIT-ALCATEL)<br>* Figures 2-5; page 5, lignes 19-35; page 6, lignes 1-3; page 7, lignes 1-7; page 8, lignes 4-7 * | 1 | G 02 B 6/44 |
| | --- | | |
| Y,D | RESEARCH DISCLOSURE, no. 186, octobre 1979, pages 555-556, no. 18637, Industrial Opportunities Ltd., Havant, Hants, GB; "Optical fibre patchcord tensile protector"<br>* Figure; page 556, colonne 1, lignes 8-12 * | 1 | |
| | --- | | |
| A | DE-U-8 109 413 (KABEL- UND METALLWERKE)<br>* Figure 1; page 4, lignes 3-25 * | 2 | DOMAINES TECHNIQUES RECHERCHES (Int. Cl.4) |
| | --- | | |
| A | DE-B-2 505 027 (SIEMENS)<br>* Figure 6; colonne 4, lignes 18-39 * | 3 | G 02 B 6/00 |
| | ----- | | |

Le présent rapport de recherche a été établi pour toutes les revendications

| Lieu de la recherche | Date d'achèvement de la recherche | Examinateur |
|---|---|---|
| LA HAYE | 22-10-1987 | MATHYSSEK K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82